(19) Europäisches Patentamt
European Patent Office
Office européen des brevets

(11) **EP 1 955 881 B1**

(12) **EUROPÄISCHE PATENTSCHRIFT**

(45) Veröffentlichungstag und Bekanntmachung des Hinweises auf die Patenterteilung:
**19.10.2011 Patentblatt 2011/42**

(51) Int Cl.:
***B60H 1/32*** *(2006.01)*

(21) Anmeldenummer: **08101370.8**

(22) Anmeldetag: **07.02.2008**

(54) **Verfahren zum Betreiben eines Kältemittelkreislaufes einer Klimaanlage für den Innenraum eines Fahrzeuges**

Method for operating a refrigerant circuit of an air conditioner for a vehicle interior

Procédé d'opération d'un circuit frigorifique d'un climatiseur pour l'intérieur d'un véhicule

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.02.2007 DE 102007006677**

(43) Veröffentlichungstag der Anmeldung:
**13.08.2008 Patentblatt 2008/33**

(73) Patentinhaber: **Behr-Hella Thermocontrol GmbH 70190 Stuttgart (DE)**

(72) Erfinder:
• **Trapp, Ralph, Dr.-Ing.**
**33102 Paderborn (DE)**
• **Frigge, Michael, Dr.-Ing.**
**33102 Paderborn (DE)**
• **Michalek, David**
**59555 Lippstadt (DE)**

(74) Vertreter: **von Kreisler Selting Werner Deichmannhaus am Dom Bahnhofsvorplatz 1 50667 Köln (DE)**

(56) Entgegenhaltungen:
**DE-A1- 10 013 717    DE-A1- 19 706 663
DE-A1- 19 851 907    US-A1- 2004 089 004**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betreiben eines Kältemittelkreislaufes einer Klimaanlage für den Innenraum eines Fahrzeuges, insbesondere eines Kraftfahrzeuges. Speziell betrifft die Erfindung ein Verfahren zur Erkennung und/oder Vermeidung einer Überhitzung eines von mehreren Verdampfern in einem Mehrverdampfer-Kältekreislauf.

Fahrzeug-Klimaanlagen verfügen über Kältemittelkreisläufe, um die dem Innenraum des Fahrzeuges zuzuführende Luft zu kühlen (und auch zu entfeuchten). Ein Kältemittelkreislauf umfasst einen Verdichter, der das gasförmige Kältemittel verdichtet. Die dabei entstehende Wärme wird über einen Gaskühler zur Umgebung abgegeben. Das nun unter hohem Druck stehende (verflüssigte) Kältemittel gelangt über ein Ventil in einen Verdampfer, in dem es sich entspannt. Hierbei entzieht das Kältemittel seiner Umgebung Wärme, was bei einer Klimaanlage zur Kühlung der den Verdampfer durchströmenden, dem Insassenraum zuzuführenden Luft genutzt wird. Anschließend wird das entspannte Kältemittel wieder dem Verdichter zugeführt.

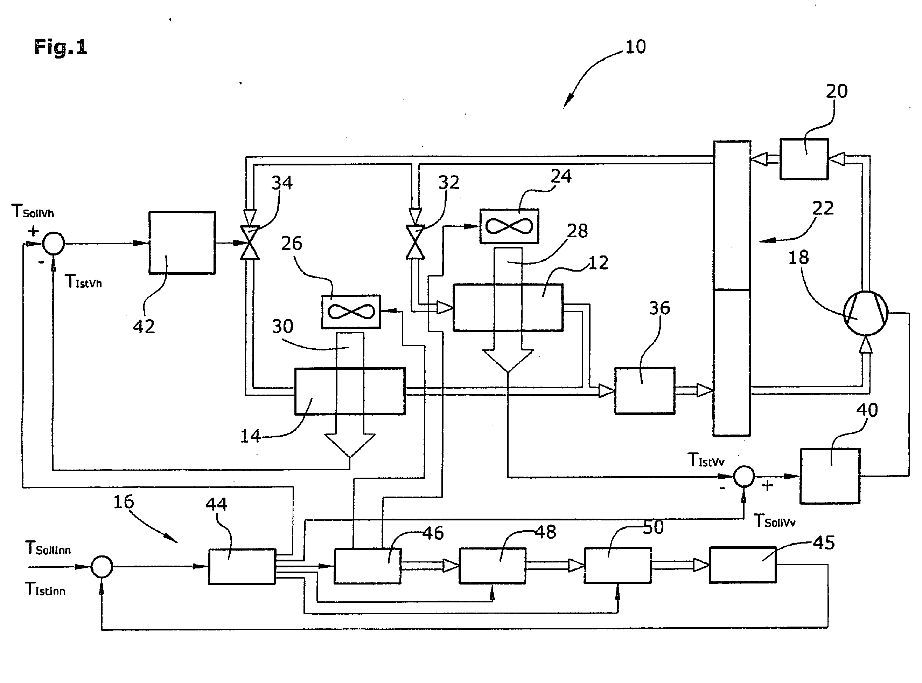

Für die Klimatisierung von Fahrzeugen mit größeren Kabinenvolumen und damit zur Erhöhung des Komforts insbesondere der Fondinsassen (Insassen auf der Rückbank bzw. allgemein hinter den Vordersitzen) werden Kältemittelkreisläufe mit zwei Verdampfern eingesetzt, wie es beispielsweise in Fig. 1 gezeigt ist. Ein derartiger Kältemittelkreislauf weist einen ersten (vorderen) Verdampfer und einen zweiten (hinteren) Verdampfer auf. Dabei weist der erste Verdampfer zumeist eine größere Fläche bzw. Kälteleistung als der zweite Verdampfer auf. Ein Beispiel einer derartigen Klimaanlage ist in DE-A-198 51 907 beschrieben.

Beiden Verdampfern vorgeschaltet sind Ventile bzw. Expansionsorgane, die von einer gemeinsamen Kältemittelzuführleitung gespeist werden. Im Normalbetrieb des Kältemittelkreises strömt ein Teil des verdichteten Kältemittels durch das dem ersten, vorderen Verdampfer zugeordnete Expansionsorgan, während der verbleibende Teil des verdichteten Kältemittels durch das dem zweiten, hinteren Verdampfer zugeordnete Expansionsorgan strömt. Während das erste Expansionsorgan im allgemeinen einen feststehenden Querschnitt aufweist und nicht absperrbar ist, kann das zweite Expansionsorgan durch externe Ansteuerung entweder die Betriebszustände "offen" mit festem Öffnungsquerschnitt oder "geschlossen" annehmen. Alternativ kann als zweites Expansionsorgan ein regelbares Expansionsorgan mit einem variablen Öffnungsquerschnitt eingesetzt werden.

Im normalen Regelbetrieb wird der Verdichter extern derart angesteuert, dass die Temperatur der den vorderen, ersten Verdampfer verlassenden, dem Innenraum des Fahrzeugs zuzuführenden Luft auf einen von einem übergeordneten Regelsystem vorgegebenen Sollwert eingeregelt wird. Die Luft der den hinteren, zweiten Verdampfer verlassenden, in den hinteren Bereich des Innenraums des Fahrzeuges einströmenden Luft wird dann durch die Ansteuerung des hinteren, zweiten Expansionsorgans geregelt (Zwei-Punkt-Regler oder kontinuierlicher Regler). Der Luftdurchsatz durch jeden der beiden Verdampfer wird durch je ein separates Gebläse gesteuert.

Zur Abkühlung der durch die Verdampfer strömenden Luft wird im Regelfall ausschließlich die Verdampfungsenthalpie des unter Druck stehenden, flüssig in den Verdampfer einströmenden Kältemittels genutzt. Ist das Kältemittel vor dem Austritt aus dem Verdampfer bereits vollständig verdampft, wird es durch den eigentlich abzukühlenden Warmluftstrom noch zusätzlich erwärmt und tritt damit aus dem Verdampfer mit einer Temperatur aus, die deutlich über der Verdampfungstemperatur in der gasförmigen Phase des Kältemittels liegt. In diesem Betriebszustand spricht man auch von einer "Überhitzung" des Verdampfers. Eine Überhitzung des Verdampfers ist bezüglich der Energieeffizienz des Kältekreislaufes möglichst zu vermeiden, da dem gasförmigen Kältemittel über den Verdichter weitaus mehr Energie zugeführt werden muss, als es zur Überführung des Kältemittels aus dessen gasförmiger in dessen flüssige Phase erforderlich ist. Überdies wirkt sich eine Überhitzung des Verdampfers auch bezüglich des Komforts nachteilig auf die Fahrzeuginsassen aus, da die in den Innenraum des Fahrzeuges einströmende Luft nicht ausreichend gekühlt und/oder nicht homogen gleich kühl ist.

Aufgabe der Erfindung ist es, ein Verfahren zum Betreiben eines Kältemittelkreislaufes einer Klimaanlage für den Innenraum eines Fahrzeuges mit einem ersten und mindestens einem zweiten Verdampfer zu schaffen, wobei insbesondere durch einfache Maßnahmen eine Überhitzung einer der Verdampfer erkannt und/oder vermieden werden kann.

Zur Lösung dieser Aufgabe wird mit der Erfindung ein Verfahren zum Betreiben eines Kältemittelkreislaufes einer Klimaanlage für den Innenraum eines Fahrzeuges nach Anspruch 1 vorgeschlagen.

Zur Lösung der obigen Aufgabe dient ferner ein Verfahren zur Erkennung einer Überhitzungsgefahr eines ersten von mindestens zwei von einem gemeinsamen Verdichter mit verdichtetem Kältemittel versorgten Verdampfern eines Kältemittelkreislaufes einer Klimaanlage für den Innenraum eines Fahrzeuges, wie in Anspruch 6 angegeben.

Nach dem erfindungsgemäßen Verfahren wird die Wärmemenge pro Zeiteinheit, also die Wärmeleistung und somit die Kälteleistungsanforderung der dem ersten Verdampfer zuzuführenden Luft ermittelt oder abgeschätzt. Die Wärmemenge bzw, Wärmeleistung ist insbesondere abhängig von der Temperatur der dem Verdampfer zuzuführenden Luft und dem Luftmassendurchsatz (Luftmenge pro Zeiteinheit), der den Verdampfer passiert. Nachdem der Kältemittelkreislauf über einen (einzigen) Verdichter verfügt, kann den Verdampfern insgesamt auch nur der Massenstrom an verdichtetem Kältemittel zugeführt werden, der von dem Verdichten aufgebracht wird. Erfindungsgemäß wird nun auf die Verteilung des Kältemittelmassestroms auf die einzelnen Verdampfer eingewirkt, und zwar dergestalt, dass der Kältemittelmassestrom durch den ersten Verdampfer stets ausreichend groß ist, um die dem ersten Verdampfer zuzuführende Luft unabhängig von deren Wärmeleistung auf eine gewünschte, von einem übergeordneten Regelsystem vorgegebene Temperatur abkühlen zu können. Dies wird erfindungsgemäß dadurch erreicht, dass der Kältemittelmassestrom durch den mindestens einen zweiten Verdampfer entsprechend eingestellt wird. Mit anderen Worten wird also bei erkannter oder bei sich abzeichnender Überhitzung des ersten Verdampfers auf den Kältemittelmassestrom durch den mindestens einen zweiten Verdampfer derart eingewirkt, dass dessen Kältemittelmassestrom reduziert wird, so dass der Kältemittelmassestrom durch den (vor einer Überhitzung zu schützenden) ersten Verdampfer erhöht wird. Sobald nach einem derartigen Eingriff in die Verteilung der Kältemittelmasseströme auf die einzelnen Verdampfer keine Überhitzung des ersten Verdampfers bzw. keine Gefahr einer Überhitzung des ersten Verdampfers mehr besteht, wird der Kältemittelmassestrom durch den mindestens einen zweiten Verdampfer wieder erhöht, wodurch sich der Kältemittelmassestrom durch den ersten Verdampfer wieder verringert.

Das erfindungsgemäße Konzept erlaubt es, den Kältemittelkreislauf für im Normalbetrieb vergleichsweise geringe und damit energetisch vorteilhafte Kälteleistungen auszulegen, ohne aber in Extremsituationen auf einen Überhitzungsschutz (zumindest einer der Verdampfer) verzichten zu müssen. Bei normaler Systemauslegung im eingeregelten Betrieb tritt bei einem Zwei- bzw. Mehr-Verdampfier-Kälternittelkreislaufi bei mittleren Luftmassenströmen über den Verdampfern in der Regel keine Überhitzung auf. Der Überhitzungsschutz bedarf keinerlei zusätzlicher Stell- bzw. Regelglieder für den Kältemittelkreislauf, was sich ebenfalls vorteilhaft auf die Gesamtkosten des Kältemittelkreislaufes und dessen Ansteuerung auswirkt.

Insbesondere ist es daher nach der Erfindung weiterhin möglich, einen Kältemittelkreislauf mit zwei Verdampfern zu verwenden, von denen lediglich einer über ein verstellbares und damit kostenintensives Expansionsorgan verfügt. Im normalen Regelbetrieb wird nun der Verdichter derart angesteuert, dass die Temperatur des den vorderen, ersten Verdampfer verlassenden Luft auf einem vom Innenraumtemperaturregelsystem vorgegebenen Sollwert eingeregelt wird. Damit braucht für den Normalbetrieb das dem ersten Verdampfer zugeordnete Expansionsorgan nicht verstellbar ausgeführt zu sein. Lediglich das dem zweiten Verdampfer (und jedem weiteren Verdampfer) zugeordnete Expansionsorgan sollte steuerbar sein (Expansionsorgan entweder mit Absperrfunktion oder mit variablem Öffnungsquerschnitt).

In vorteilhafter Weiterbildung der Erfindung ist vorgesehen, dass die Wärmeleistung der dem ersten Verdampfer zuzuführenden Luft anhand des Luftmassenstroms ermittelt bzw. abgeschätzt wird. Zusätzlich kann noch die Temperatur der dem ersten Verdampfer zuzuführenden Luft herangezogen werden, um die Wärmeleistung der Luft abzuschätzen bzw, zu ermitteln. Die Wärmeleistung der Luft ist schließlich auch abhängig von der Feuchte der Luft, die ebenfalls zusätzlich mit einbezogen werden kann, wenn es um die Ermittlung bzw. Abschätzung der Wärmeleistung der dem ersten Verdampfer zuzuführenden Luft geht.

Besonders zweckmäßig weil einfach realisierbar ist es, wenn man eine sich abzeichnende Überhitzung eines der Verdampfer anhand des Verhältnisses der den Verdampfern zugeführten Luftmassenströme oder des Verhältnisses der abgeschätzten Wärme-/Kälteleistungen der Verdampfer detektiert. Bei normaler Systemauslegung im eingeregelten Betrieb und bei mittleren Luftmassenströmen durch die Verdampfer stellt sich ein Normalverhältnis der Luftmassenströme ein. Wenn nun auf Grund veränderter Sollwerte oder anderer Betriebsparameter der Klimaanlage von diesem Normalverhältnis abgewichen wird, so wird erfindungsgemäß in der oben beschriebenen Weise auf den Kältemittelkreislauf und insbesondere auf die Verteilung der Kältemittelkreislaufströme auf die Verdampfer eingewirkt. Erfindungsgemäß soll der erste Verdampfer vor einer Überhitzung geschützt werden. Steigt also der Luftmassenstrom durch den ersten Verdampfer (deutlich) an, so verändert sich das Verhältnis entsprechend. In Abhängigkeit von einem das Verhältnis beschreibenden Index kann also zum einen auf eine sich abzeichnende Überhitzung des ersten Verdampfers geschlossen und zum anderen eine bereits eingetretene Überhitzung rückgeführt werden. Diese Art der Erkennung einer sich abzeichnenden bzw. bereits eingetretenen Überhitzung bringt ferner den Vorteil mit sich, dass auf Temperaturfühler oder dergleichen Sensorik-Elemente gänzlich verzichtet werden kann. Es ist lediglich erforderlich, die die augenblicklichen Leistungen der den Verdampfern zugeordneten Gebläse ins Verhältnis zueinander zu setzen. Hier bietet es sich an, die augenblicklichen Betriebsspannungen der Gebläse miteinander zu verrechnen und damit auf das Verhältnis der Luftmassenströme durch die Verdampfer zu schließen. Eine Möglichkeit der Berechnung des das Wärrnemengenverhäftnis der Luftmassenströme durch die Verdampfer repräsentierenden Index ist gemäß folgender Gleichung gegeben:

$$I_{\ddot{U}h} = \frac{P_{Fan1}}{P_{Fan1} + P_{Fan2}}$$

oder

$$I_{\ddot{U}h} = \frac{U_{Fan1}}{U_{Fan1} + U_{Fan2}}$$

wobei mit $I_{\ddot{U}h}$ der "Überhitzungs"-Index, mit $P_{Fan1/2}$ die Leistung und mit $U_{Fan1/2}$ die normierte elektrische Betriebsspannung der beiden Verdampfer eines Zwei-Verdampfer-Kältemittelkreislaufes gemeint sind.

Bei der oben angegebenen Rechnungsvorsohrift für den Überhitzungsindex gilt, dass der erste Verdampfer (Verdampfer 1) um so eher zur Überhitzung neigt, je größer der Überhitzungsindex ist. Dabei existiert ein Schwellwert, bis zu dem keine Überhitzung auftritt. Bei gleicher (normierter) Gebläseleistung bzw. Gebläsespannung beider Gebläse wird $I_{\ddot{U}h}$ zu 0,5. Mit Zunahme der Werte des Überhitzungsindex bis zu dem Grenzwert $I_{\ddot{U}h}$ -> 1 nimmt auch die Neigung zur Überhitzung des ersten Verdampfers (Verdampfer 1) stetig zu. Die Werte für die aktuellen Gebläseleistungen bzw. Gebläsespannungen stehen im Regelfall in der Applikationssoftware der Klimaanlage zur Verfügung, so dass keine zusätzliche Sensorik erforderlich ist.

Die Erfindung wird nachfolgend anhand eines Ausführungsbeispiels unter Bezugnahme auf die Zeichnung näher erläutert. Im einzelnen zeigen:

Fig. 1    schematisch den Aufbau eines herkömmlichen Zwei-Verdampfer-Kältemittelkreislaufs ohne Uberhitzungsdetektion und -schutz und

Fig. 2    schematisch den Kältemittelkreislauf mit zwei Verdampfern gemäß Fig. 1 mit Überhitzungserkennung und -schutz.

Fig. 1, zeigt den grundsätzlichen Aufbau eines Typs eines Kältemittelkreislaufs 10 mit zwei Verdampfern 12,14 und seiner Einbindung in eine Innenraumtemperaturregelung 16, Der Kältemittelkreislauf 10 umfasst einen extern geregelten Verdichter 18, der gasförmiges Kältemittel (beispielsweise $CO_2$ bzw. R744) verdichtet und in die flüssige Phase überführt. Die dabei entstehende Wärme wird über einen Wärmetauscher 20 (Gaskühler) an die Umgebung abgegeben. Anschließend passiert das hoch verdichtete flüssige Kältemittel einen weiteren Wärmetauscher 22, auf den später noch eingegangen werden wird.

Hinter dem Wärmetauscher 22 wird der Strom flüssigen Kältemittels auf die beiden parallel geschalteten Verdampfer 12,14 aufgeteilt. Dabei sind beiden Verdampfern 12,14 jeweils ein Gebläse 24,26 zugeordnet, die jeweils einen Luftstrom 28,30 erzeugen, welche den Verdampfer 12 bzw. 14 durchströmen und anschließend nach dem Passieren von Heizaggregaten dem Innenraum eines Fahrzeuges zugeführt werden. Den beiden Verdampfern 12,14 jeweils vorgeschaltet sind Expansionsorgane bzw. Ventile 32,34, von denen das dem ersten Verdampfer 12 zugeordnete Expansionsorgan 32 einen festen Öffnungsquerschnitt und keine Absperrfunktion aufweist, während das andere, dem zweiten Verdampfer 14 zugeordnete Expansionsorgan 34 regelbar ist (entweder mit Absperrfunktion oder mit variablem Öffnungsquerschnitt),

Das sich in den Verdampfern 12,14 entspannende Kältemittel gelangt hinter den Verdampfern in ein Reservoir oder Ausgleichsbehältnis 36, von dem aus es den Wärmetauscher 22 durchströmt, um wieder zum Verdichter 18 zu gelangen. Der vom erwärmten hochverdichteten Kältemittel gespeiste Wärmetauscher 22 sorgt dafür, dass ein potentielles Anteil an hinter den Verdampfern sich noch in der Flüssigphase befindlichem Kältemittel in die Gasphase überführt wird.

Die beiden Verdampfer 12,14 sind geregelt, was die Temperatur der sie verlassenden Luftmassenströme 28,30 anbelangt. Die Regelung der Verdampfertemperatur des dem vorderen Bereich des Innenraums zugeordneten ersten bzw. vorderen Verdampfers 12 erfolgt durch einen Regler 40, der in Abhängigkeit von der Differenz der Isttemperatur und einer vorgegebenen Solltemperatur des ersten Verdampfers 12 den Verdichter 18 entsprechend ansteuert. Die Temperaturregelung des dem hinteren Bereich des Innenraums zugeordneten zweiten bzw. hinteren Verdampfers 14 erfolgt mit Hilfe eines Reglers 42, der in Abhängigkeit von der Differenz des Istwerts und eines Sollwerts des hinteren Verdampfers 14 das Expansionsorgan 34 ansteuert. Die beiden Sollwerte für die Temperaturen des vorderen und des hinteren Verdampfers 12,14 werden von einem übergeordneten Innenraumtemperaturregler 44 vorgegeben, der an seinem Eingang die Differenz aus der Isttemperatur des Innenraums 45 des Fahrzeuges und einer von den Insassen vorgegebenen Solltemperatur empfängt. Der Innenraumtemperaturregler 44 steuert ein Stellglied 46 für die den vorderen und hinteren Verdampfern 12,14 zugeordneten Gebläse 24,26 sowie Stellglieder 48,50 eines Heizaggregats und eines Luftverteiiungssystems, durch das die temperierte Luft dem Innenraum 45 des Fahrzeuges zugeleitet wird.

Im normalen Regelbetrieb wird der Verdichter 18 von dem Regler 40 derart betrieben, dass die Temperatur der den ersten Verdampfer 12 verlassenden Luft auf einen vorgegebenen Sollwert eingeregelt wird. Die Temperatur der den hinteren Verdampfer 14 verlassenden Luft wird durch Ansteuerung des Expansionsorgans 34 geregelt (entweder Zwei-Punkt-Regelung bei festem Expansionsorgan mit Absperrfunktion oder kontinuierliche Regelung bei Expansionsorgan mit variablem Öffnungsquerschnitt). Im Normalbetrieb ist der Kältemittelkreislauf derart ausgelegt, dass das Kältemittel vor dem Verlassen der jeweiligen Verdampfer 12,14 noch nicht vollständig in die gasförmige Phase übergegangen ist, also keine Überhitzung eintritt. Von diesem Normalfall wird jedoch abgewichen, wenn die einem der beiden Verdampfer luftseitig zugeführte Wärmeleistung deutlich erhöht ist. Für die folgende Beschreibung sei angenommen, dass die dem ersten, vorderen Verdampfer 12 luftseitig zugeführte Wärmeleistung erhöht wird. Dies kann darin begründet sein, dass die Passagiere auf den vorderen Sitzen eine erhöhte Kälteleistung abfordern, was beispielsweise durch Herabsetzung der Soll-Innenraumtemperaturen (für den vorderen Bereich des Innenraums) hervorgerufen wird.

Wie bereits oben im Zusammenhang mit der Beschreibung der Erfindung erwähnt, gilt es , eine Überhitzung des vorderen Verdampfers 12 zu verhindern. Dazu wiederum muss eine sich anbahnende Überhitzung zunächst einmal erkannt werden.

Ein erstes Kriterium für die Gefahr einer Überhitzung des vorderen Verdampfers 12 ist der Luftmassenstrom über diesem. Eine besonders einfache Methode der frühzeitigen Erkennung einer sich anbahnenden Überhitzung besteht darin, das Verhältnis der augenblicklichen Leistungen bzw. Betriebsspannungen der Gebläse 24,26 zu überwachen, Bei diesem Ausführungsbeispiel der Erfindung wird zu diesem Zweck ein Überhitzungsindex $I_{Üh}$ berechnet, und zwar wie folgt:

$$I_{Üh} = \frac{P_{Fan1}}{P_{Fan1} + P_{Fan2}}$$

oder

$$I_{Üh} = \frac{U_{Fan1}}{U_{Fan1} + U_{Fan2}}$$

wobei mit $I_{Üh}$ der "Überhitzungs"-Index, mit $P_{Fan1/2}$ die Leistung und mit $U_{Fan1/2}$ die elektrische Betriebsspannung der den beiden Verdampfern eines Zwei-Verdampfer-Kältemittelkreislaufes gemeint sind.

Je größer dieser Überhitzungsindex ist, desto eher neigt der betreffende Verdampfer (in diesem Fall der Verdampfer 12) zur Überhitzung, Dabei kann ein Schwellwert vorgegeben werden, bis zu dem keine Überhitzung auftritt. Dieser Schwellwert kann beispielsweise bei $I_{Üh} = 0,5$ liegen. Mit Zunahme des Überhitzungsindex bis auf Werte von $I_{Üh} -> 1$ nimmt die Neigung zur Überhitzung des vorderen Verdampfers 12 zu.

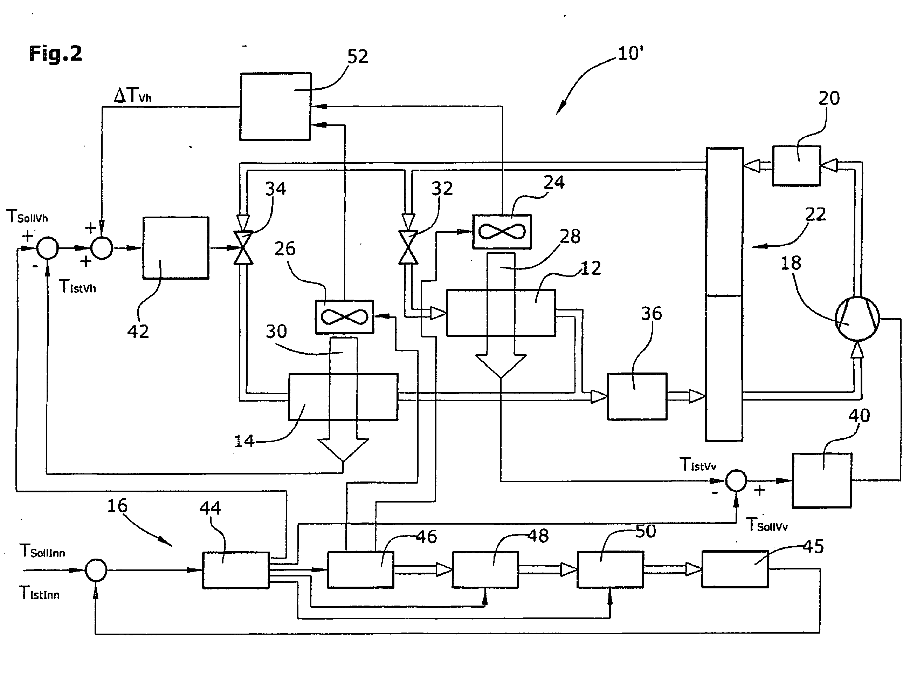

Daher werden bei dem erfindungsgemäßen Kältemittelkreislauf 10', wie er in Fig. 2 gezeigt ist, die augenblicklichen Werte für die Gebläsespannungen bzw. Gebläseleistungen überwacht. Dies ist in Fig. 2 dadurch angedeutet, dass die aktuellen Gebläsespannungen durch eine Einheit 52 ausgewertet und miteinander verrechnet werden, um in diesem Ausführungsbeispiel indirekt den Kältemittelmassestrom durch den vor Überhitzung zu schützenden ersten, vorderen Verdampfer 12 zu erhöhen. Bei dem erfindungsgemäßen Ausführungsbeispiel gemäß Fig. 2 handelt es sich letztendlich um einen modifizierten Kältemittelkreislauf gemäß Fig. 1, eingebettet in die gleiche Reglerstruktur jedoch mit Überhitzungserkennung und -schutz des ersten, vorderen Verdampfers 12. Daher sind in den Fign. 1 und 2 gleiche Elemente des Kältemittelkreislaufs 10 und 10' sowie der Regelungsumgebung mit gleichen Bezugszeichen versehen.

Wie bereits oben erwähnt, kann die Überhitzung des vorderen Verdampfers 12 durch Erhöhung des Kältemittelmassestroms vermindert bzw. vermieden werden. Um in dem hier beschriebenen Zwei-Verdampfer-Kältemittelkreislauf 10' den Kältemittelmassestrom durch den vorderen Verdampfer zu erhöhen, kann (bei gleichbleibender Ansteuerung des Verdichters 18) der Kältemittelmassestrom durch den hinteren Verdampfer 14 verhingert werden. Denn das Expansionsorgan 32 für den vorderen Verdampfer 12 ist nicht verstellbar. Die zum Schutz vor Überhitzung des vorderen Verdampfers 12 erforderliche Verringerung des Kältemittelmassestroms durch den hinteren Verdampfer 14 kann durch eine Verkleinerung des Querschnitts des Expansionsorgans 34 (bei einem Expansionsorgan mit veränderbarem Querschnitt) oder durch eine Verlängerung der "geschlossen"-Zyklen (bei einem Expansionsorgan mit festem Querschnitt und Absperrfunktion) erreicht werden.

Durch die mit der Erhöhung des Kältemittelmassestroms durch den vorderen Verdampfer 12 einhergehende Verringerung des Kältemittelmassestroms durch den hinteren Verdampfer 14 besteht nun bei diesem die Gefahr der Überhitzung. Dies ist aber insofern tolerabel, als der vordere Verdampfer 12 zumeist der leistungsstärkere ist, eine Überhitzung des hinteren Verdampfers also energetisch nicht so nachteilig wie die Überhitzung des vorderen Verdampfers ist und überdies im Hinblick auf eine Komfortsteigerung vermehrt darauf zu achten ist, dass die Klimatisierung im vorderen Bereich des Innenraums, der im Gegensatz zum hinteren Bereich bei jeder Fahrt (durch den Fahrer) besetzt ist, stets wie gewünscht erfolgen können sollte,

In dem hier beschriebenen Ausführungsbeispiel des Kältemittelkreislaufs 10' gemäß Fig. 2 wird zur Veränderung des Kältemittelmassestroms durch den hinteren Verdampfer 14 der Sollwert für die Temperatur des hinteren Verdampfers 14 bzw. die Regeldifferenz (Führungsgröße für den Regler 42) angehoben, und zwar vorteilhafterweise umso mehr, je größer der oben angegebene Überhitzungsindex $I_{Üh}$ ist. Umgekehrt erfolgt die Absenkung des Sollwerts für die Temperatur des hinteren Verdampfers 14 bzw. die Regeldifferenz umso mehr, je mehr sich der Wert des Überhitzungsindex wieder dem Normalwert (Schwellwert) annähert bzw. diesen erreicht.

**BEZUGSZEICHENLISTE**

10    Kältemittelkreislauf

10' Kältemittelkreislauf
12 vorderer Verdampfer
14 hinterer Verdampfer
16 Innenraumtemperaturregelung
18 Verdichter
20 Wärmetauscher
22 Wärmetauscher
24 Gebläse
26 Gebläse
28 Luftstrom
30 Luftstrom
32 Expansionsorgan
34 Expansionsorgan
36 Ausgleichsbehältnis
40 Regler
42 Regler
44 Innenraumtemperaturregler
45 Innenraum
46 Stellglied
48 Stellglied
50 Stellglied
52 Auswerteeinheit

**Patentansprüche**

1. Verfahren zum Betreiben eines Kältemittelkreislaufes einer Klimaanlage für den Innenraum eines Fahrzeuges, wobei der Kältemittelkreislauf einen Verdichter (18) zum Verdichten des Kältemittels und einen ersten sowie mindestens einen zweiten Verdampfer (12,14) aufweist, die parallel geschaltet sind und in denen sich verdichtetes Kältemittel zur Kühlung von dem Innenraum des Fahrzeuges zuzuführender Luft entspannt, wobei die den Verdampfern (12,14) jeweils zuzuleitenden Kältemittelmasseströme durch den Verdampfern (12,14) jeweils zugeordnete Expansionsorgane (32,34) bestimmt sind, wobei

> - die Wärmeleistung der dem ersten Verdampfer (12) zuzuführenden Luft ermittelt oder abgeschätzt wird und
> - bei erkannter oder sich abzeichnender Überhitzung des ersten Verdampfers (12) der Kältemittelmassestrom durch den mindestens einen zweiten Verdampfer (14) in Abhängigkeit von der ermittelten bzw. abgeschätzten Wärmeleistung der dem ersten Verdampfer (12) zuzuführenden Luft derart eingestellt wird, dass der Kältemittelmassestrom durch den ersten Verdampfer (12) ausreichend groß ist, um die dem ersten Verdampfer (12) zugeführte Luft ohne Überhitzung des ersten Verdampfers (12) auf eine gewünschte Temperatur abkühlen zu können.

2. Verfahren nach Anspruch 1, **dadurch gekennzeichnet, dass** das dem ersten Verdampfer (12) zugeordnete Expansionsorgan (32) einen nicht veränderbaren Querschnitt aufweist sowie nicht absperrbar ist und dass das dem mindestens einen zweiten Verdampfer (14) zugeordnete Expansionsorgan (34) zur Veränderung seines Querschnitts und/oder des Verhältnisses der Auf- und Geschlossen-Zustandszeiten ansteuerbar ist.

3. Verfahren nach Anspruch 1 oder 2, **dadurch gekennzeichnet, dass** die Wärmeleistung der dem ersten Verdampfer 12 zuzuführenden Luft ausschließlich anhand des Luftmassestroms oder alternativ anhand des Luftmassestroms und der Temperatur und/oder der absoluten bzw. relativen Feuchte der Luft ermittelt und/oder abgeschätzt wird.

4. Verfahren nach einem der Ansprüche 1 bis 3, **dadurch gekennzeichnet, dass** dem ersten Verdampfer (12) und dem mindestens einen zweiten Verdampfer (14) jeweils ein Gebläse (24,26) zugeordnet ist und dass aus dem Verhältnis der aktuellen normierten Leistungen der Gebläse (24,26) ein Index berechnet wird, der ein Maß für die Wärmeleistung der dem ersten Verdampfer (12) zuzuführenden Luft im Verhältnis zur Wärmeleistung der dem mindestens einen zweiten Verdampfer (14) zuzuführenden Luft ist, und dass bei erkannter oder sich abzeichnender Überhitzung des ersten Verdampfers (12) der Kältemittelmassestrom durch den mindestens einen zweiten Verdampfer (14) in Abhängigkeit von der Größe des berechneten Index derart eingestellt wird, dass der Kältemittelmassestrom durch den ersten Verdampfer (12) ausreichend groß ist, um die dem ersten Verdampfer (12) zugeführte Luft ohne Überhitzung des ersten Verdampfers (12) auf die gewünschte Temperatur abkühlen zu können.

5. Verfahren nach Anspruch 4, **dadurch gekennzeichnet, dass** der Kältemittelmassestrom durch den mindestens einen zweiten Verdampfer (14) zur Erhöhung des Kältemittelmassestroms durch den ersten Verdampfer (12) umso mehr verringert wird, je größer die Wärmeleistung des ersten Verdampfers (12) im Verhältnis zur Wärmeleistung des zweiten Verdampfers (14) und damit je größer der Index ist.

6. Verfahren nach einem der Ansprüche 1 bis 5, **dadurch gekennzeichnet, dass** dem mindestens einen zweiten Verdampfer (14) eine Verdampfertemperaturregelung zur Regelung der Isttemperatur der durch den Verdampfer strömenden und dem Innenraum des Fahrzeugs zuzuführenden Luft auf eine vorgegebene Solltemperatur zugeordnet ist und dass die Einstellung des Kältemittelmassestroms durch den mindestens einen zweiten Verdampfer (14) dergestalt, dass bei erkannter oder sich abzeichnender Überhitzung des ersten Verdampfers (12) der Kältemittel- massestrom durch den ersten Verdampfer (12) ausreichend groß ist, um die dem ersten Verdampfer (12) zuzuführende Luft ohne Überhitzung des ersten Verdampfers (12) auf die gewünschte Temperatur abkühlen zu können, was durch Veränderung der Differenz aus Ist- und Solltemperatur der durch den zweiten Verdampfer (14) strömenden und dem Innenraum des Fahrzeugs zuzuführenden Luft erfolgt.

7. Verfahren zur Erkennung einer Überhitzungsgefahr eines ersten von mindestens zwei von einem gemeinsamen Verdichter (18) mit verdichtetem Kältemittel versorgten Verdampfern (12,14) eines Kältemittelkreislaufes (10') einer Klimaanlage für den Innenraum eines Fahrzeuges, wobei

   - der erste Verdampfer (12) zur Erzeugung einer Kälteleistung zum Abkühlen der dem ersten Verdampfer (12) zuzuführenden Luft auf eine vorgegebene Temperatur mit einem Kältemittelmassestrom versorgt wird,
   - die aktuelle Wärmeleistung der dem ersten Verdampfer (12) zuzuführenden Luft ermittelt oder abgeschätzt wird und
   - ein Überhitzungsindex berechnet wird, der ein Maß für die Wärmeleistung der dem ersten Verdampfer (12) zuzuführenden Luft im Verhältnis zur Wärmeleistung der dem mindestens einen zweiten Verdampfer (14) zuzuführenden Luft ist, und auf Überhitzungsgefahr erkannt wird, wenn der Index größer als ein vorgebbarer Schwellwert ist.

8. Verfahren nach Anspruch 7, **dadurch gekennzeichnet, dass** der Überhitzungsindex das Verhältnis aus den normierten Werten für die aktuellen Leistungen von den Verdampfern (12,14) zugeordneten Gebläsen (24,26) repräsentiert.

9. Verfahren nach Anspruch 8, **dadurch gekennzeichnet, dass** der Überhitzungsindex aus den normierten Werten für die aktuellen Betriebsspannungen der Gebläse (24,26) berechnet wird.

**Claims**

1. Method of operating a refrigerant circuit of an air condition system for a vehicle interior, the refrigerant circuit comprising a compressor (18) for compressing the refrigerant and a first and at least a second evaporator (12, 14) connected in parallel and in which compressed refrigerant expands in order to cool air to be supplied to the vehicle interior, wherein the refrigerant mass flows to be supplied respectively to the evaporators (12, 14) are determined by expansion elements (32, 34) respectively assigned to the evaporators (12, 14), wherein

   - the thermal capacity of the of the air supplied to the first evaporator (12) is determined or estimated, and
   - upon a detected or imminent overheating of the first evaporator (12), the refrigerant mass flow is adjusted by said at least one second evaporator (14) as a function of the detected or estimated thermal capacity of the air to be supplied to the first evaporator (12), such that the refrigerant mass flow through the first evaporator (12) is sufficiently high to cool the air to be supplied to the first evaporator (12) to a desired temperature without overheating the first evaporator (12).

2. Method according to claim 1, **characterized in that** the expansion element (32) assigned to the first evaporator (12) has an invariable cross section and is not closable, and that the expansion element (34) assigned to the at least one second evaporator (14) is controllable for the variation of its cross section and/or of the ratio of the open and closed state periods.

3. Method according to claim 1 or 2, **characterized in that** the thermal capacity of the air to be supplied to the first evaporator (12) is determined and/or estimated exclusively by air mass flow or, as an alternative, by the air mass flow and the temperature and/or the absolute or relative humidity of the air.

4. Method according to one of claims 1 to 3, **characterized in that** a respective fan (24, 26) is assigned to the first evaporator (12) and the at least one second evaporator (14), and that an index is calculated from the ratio of the current normalized capacities of the fans (24, 26), which index is a measure of the thermal capacity of the air to be supplied to the first evaporator (12) relative to the thermal capacity of the air to be supplied to the at least one second evaporator (14), and that upon a detected or imminent overheating of the first evaporator (12), the refrigerant mass flow is adjusted by said at least one second evaporator (14) as a function of the value of the calculated index, such that the refrigerant mass flow through the first evaporator (12) is sufficiently high to cool the air to be supplied to the first evaporator (12) to a desired temperature without overheating the first evaporator (12).

5. Method of claim 4, **characterized in that**, in order to increase the refrigerant mass flow through the first evaporator (12), the refrigerant mass flow through the at least one second evaporator (14) is reduced the more, the higher the thermal capacity of the first evaporator (12) is relative to the thermal capacity of the second evaporator (14) and thus, the higher the index is.

6. Method according to one of claims 1 to 5, **characterized in that** an evaporator temperature control is assigned to the at least one second evaporator (14) for the control of the actual temperature of the air flowing through the evaporator and intended to be supplied to the vehicle interior to a predefined set temperature, and that the adjustment of the refrigerant mass flow through the at least one second evaporator (14) such that upon a detected or imminent overheating of the first evaporator (12), the refrigerant mass flow through the first evaporator (12) is sufficiently high to cool the air to be supplied to the first evaporator (12) to a desired temperature without overheating the first evaporator (12), which is achieved by changing the difference from the actual and the set temperatures of the air flowing through the second evaporator (14) to be supplied to the vehicle interior.

7. Method for the detection of a risk of overheating of a first of at least two evaporators (12, 14) of a refrigerant circuit (10') of a air condition system for a vehicle interior, said evaporator being supplied with a compressed refrigerant by a common compressor (18), wherein

    - the first evaporator (12) is supplied with a refrigerant mass flow in order to generate a cooling capacity for cooling the air to be supplied to the first evaporator (12) to a predefined temperature,
    - the current thermal capacity of the air to be supplied to the first evaporator (12) is detected or estimated, and
    - an overheating index is calculated which is a measure of the thermal capacity of the air to be supplied to the first evaporator (12) relative to the thermal capacity of the air to be supplied to the at least one second evaporator (14), and that a risk of overheating is detected if the index is higher than a predefinable threshold value.

8. Method according to claim 7, **characterized in that** the overheating index represents the ratio of the normalized values of the current capacities of fans (24, 26) assigned to the evaporators (12, 14).

9. Method of claim 8, **characterized in that** the overheating index is calculated from normalized values of the current operating voltages of the fans (24, 26).

**Revendications**

1. Procédé d'opération d'un circuit frigorifique d'un climatiseur pour l'intérieur d'un véhicule, ledit circuit frigorifique comprenant un compresseur (18) pour comprimer l'agent frigorifique et un premier et au moins un deuxième évaporateur (12, 14) qui sont connectés en parallèle et dans lesquels s'étend de l'agent frigorifique comprimé pour refroidir l'air à être alimentée dans l'intérieur du véhicule, les débits massiques d'agent frigorifique respectifs à alimenter aux évaporateurs (12, 14) étant déterminés par des éléments d'expansion (32, 34) respectifs assignés aux évaporateurs (12, 14), dans lequel

    - la capacité thermique de l'air à alimenter au premier évaporateur (12) est déterminée ou estimée, et
    - si une surchauffe du premier évaporateur (12) est détectée ou s'annonce, le débit massique d'agent frigorifique traversant ledit au moins un deuxième évaporateur (14) est réglé en fonction de la capacité thermique déterminée ou estimée de l'air à alimenter audit premier évaporateur (12), de sorte que le débit massique d'agent frigorifique traversant ledit premier évaporateur (12) est d'un ordre suffisant pour refroidir l'air alimentée au premier évaporateur (12) à une température désirée sans que le premier évaporateur (12) soit surchauffé.

2. Procédé selon la revendication 1, **caractérisé en ce que** l'élément d'expansion (32) assigné au premier évaporateur (12) a une section transversale invariable et n'est pas blocable, et que l'élément d'expansion (34) assigné audit au moins un deuxième évaporateur (14) peut être commandé pour varier sa section transversale et/ou le rapport entre les temps d'ouverture et de fermeture.

3. Procédé selon les revendications 1 ou 2, **caractérisé en ce que** la capacité thermique de l'air à alimenter au premier évaporateur (12) est déterminée ou estimée exclusivement selon le débit massique d'air ou, alternativement, selon le débit massique d'air et la température et/ou l'humidité d'air absolue ou relative.

4. Procédé selon l'une des revendications 1 à 3, **caractérisé en ce qu'**un ventilateur (24, 26) est respectivement assigné au premier évaporateur (12) et audit au moins un deuxième évaporateur (14), et qu'un index est calculé du rapport entre les capacités actuelles normalisées des ventilateurs (24, 26), ledit index étant une mesure de la capacité thermique de l'air à alimenter au premier évaporateur (12) par rapport à la capacité thermique de l'air à alimenter audit au moins un deuxième évaporateur (14), et qu'au cas d'une surchauffe détectée ou s'annonçant dudit premier évaporateur (12), ledit débit massique d'agent frigorifique traversant ledit au moins un deuxième évaporateur (14) est ajusté en fonction de la valeur dudit index calculé de sorte que le débit massique d'agent frigorifique traversant ledit premier évaporateur (12) est d'un ordre suffisant pour refroidir l'air alimentée au premier évaporateur (12) à une température désirée sans que le premier évaporateur (12) soit surchauffé.

5. Procédé selon la revendication 4, **caractérisé en ce que**, pour augmenter le débit massique d'agent frigorifique traversant le premier évaporateur (12), le débit massique d'agent frigorifique traversant ledit au moins un deuxième évaporateur (14) est réduit à mesure que la capacité thermique dudit premier évaporateur (12) est grande par rapport à la capacité thermique dudit deuxième évaporateur (14) et, par cela, que l'index est grand.

6. Procédé selon l'une quelconque des revendications 1 à 5, **caractérisé en ce qu'**une régulation de température dudit évaporateur est assignée audit au moins un deuxième évaporateur (14) pour réguler la température actuelle de l'air s'écoulant à travers ledit évaporateur et destinée à être alimentée à l'intérieur du véhicule à une température de consigne prédéterminée, et que l'ajustage dudit débit massique d'agent frigorifique traversant ledit au moins un deuxième évaporateur (14), de sorte qu'au cas d'une surchauffe détectée ou s'annonçant dudit premier évaporateur (12), ledit débit massique d'agent frigorifique traversant ledit premier évaporateur (12) est d'un ordre suffisant pour refroidir l'air alimentée au premier évaporateur (12) à une température désirée sans que le premier évaporateur (12) soit surchauffé, ce qui est réalisé par une modification de la différence entre la température actuelle et la température de consigne de l'air traversant ledit deuxième évaporateur (14) et destinée à être alimentée à l'intérieur du véhicule.

7. Procédé de détection d'un risque de surchauffe d'un premier d'au moins deux évaporateurs (12, 14) d'un circuit frigorifique d'un climatisateur pour l'intérieur d'un véhicule, les évaporateurs étant alimentés en un agent frigorifique comprimé par un compresseur (18) commun, dans lequel

   - le premier évaporateur (12) est alimenté en un débit massique d'agent frigorifique pour générer une capacité frigorifique pour refroidir l'air à alimenter au premier évaporateur (12) à une température prédéterminée,
   - la capacité thermique momentanée de l'air à alimenter au premier évaporateur (12) est déterminée ou estimée, et

   - un index de surchauffe est calculé, qui est une mesure de la capacité thermique de l'air à alimenter au premier évaporateur (12) par rapport à la capacité thermique de l'air à alimenter audit au moins un deuxième évaporateur (14), et qu'un risque de surchauffe est détecté si l'index dépasse une valeur de seuil prédéterminable.

8. Procédé selon la revendication 7, **caractérisé en ce que** ledit index de surchauffe représente le rapport entre des valeurs normalisées des capacités momentanées de ventilateurs (24, 26) assignés aux évaporateurs (12, 14).

9. Procédé selon la revendication 8, **caractérisé en ce que** ledit index de surchauffe est calculé des valeurs normalisées des tensions d'opération momentanées des ventilateurs (24, 26).

Fig.1

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19851907 A